# EUROPÄISCHE PATENTSCHRIFT

(11) **EP 1 839 768 B1**
(45) Veröffentlichungstag und Bekanntmachung des Hinweises auf die Patenterteilung: **24.09.2008**
(21) Anmeldenummer: 07003629.8
(22) Anmeldetag: 22.02.2007
(51) Int. Cl.: B21D 28/00, B21D 28/24, B21D 28/32, B23D 15/12, B23D 15/04

(54) **Stanzpresse, insbesondere zur Ablängung und Endenbearbeitung von Flachstabmaterial für Fensterbeschläge**
Punch press, in particular for trimming and finsihing of the ends of a strip material for window fittings
Presse à découper, en particulier destinée à tronçonner et à finir les extrémités de matériau plat pour ferrureries de fenêtre

(30) Priorität: 31.03.2006 DE 202006005380 U
(43) Veröffentlichungstag der Anmeldung: 03.10.2007
(73) Patentinhaber: Campex SRL, 6911 Campione d'Italia (CH)
(72) Erfinder: Reiplinger, Günter, 6911 Campione d'Italia (CH)
(74) Vertreter: Pürckhauer, Rolf

(56) Entgegenhaltungen:
- EP-A- 1 600 225
- EP-A- 1 600 283
- EP-A1- 1 502 673
- DE-A1- 4 125 992
- JP-A- 2005 081 411

## Beschreibung

Die Erfindung betrifft Stanzpressen zur Ablängung und Endenbearbeitung von Flachstabmaterial für Fensterbeschläge, mit einer handbetätigten oder motorisch angetriebenen Spindel für den Hubantrieb eines oder mehrerer mit einer Matrize zusammenwirkenden Stanzwerkzeuge, gemäß dem Oberbegriff des Anspruchs 1 (siehe z.B. EP-A-1 600 283).

Bekannt sind Stanzpressen mit Handantrieb, die als Tischpressen eingesetzt werden und mit einem Kniehebel- oder einem Exzenterantrieb ausgerüstet sind. Die Stanzwerkzeuge dieser Pressen, zum Beispiel Loch- und/oder Ablängstempel, werden angeklemmt oder angeschraubt. Diese Pressen haben den Nachteil, daß der Pressenhub durch den Handhebelweg begrenzt ist und größere Kräfte nur im unteren Bereich des Pressenhubes von 1 bis 1,5 mm zur Verfügung stehen.

Ferner sind Handhebelpressen mit einem Zahnstangenstößel bekannt. Die manuelle Antriebskraft dieser Pressen wird durch einen Handhebel und ein mit diesem fest verbundenes Zahnrad auf den Zahnstangenstößel übertragen. Die Preßkraft wird durch den Wirkdurchmesser des Zahnrades, die Länge des Handhebels und die Handkraft bestimmt. Der Pressenhub ergibt sich aus dem Wirkdurchmesser des Zahnrades und dem Schwenkwinkel des Handhebels. Die maximale Preßkraft dieser Pressen beträgt ungefähr 10.000 N.

Des weiteren kommen als Spindelpressen ausgebildete Tischpressen mit Handantrieb zum Einsatz, die im wesentlichen aus einem C-förmigen Pressengestell, einem Stößel für den Handantrieb der Werkzeuge mit einer als Trapezgewindespindel ausgebildeten Verlängerung und einem Handrad oder einem Knebelgriff für den manuellen Antrieb der Spindel bestehen. Die Preßkraft dieser bekannten Spindelpressen ist durch die große Steigung des Trapezgewindes der Antriebsspindel und den geringen Durchmesser des Handrades begrenzt. Eine Vergrößerung des Handrades ist nur möglich, wenn dieses über Kopfhöhe der Bedienungsperson angeordnet wird. Eine derartige Anbringung des Handrades an der Antriebsspindel der Presse ist jedoch unwirtschaftlich.

Für Preßkräfte über 10.000 N bei Pressenhüben über 1,5 mm kommen hydraulische, pneumatische oder hydropneumatische Pressen zum Einsatz. Diese Pressen haben die Nachteile, daß sie sehr große Abmessungen aufweisen, die Herstellung der Pressen aufwendig und teuer ist und die Pressen mit teuren Mehrfachwerkzeugen ausgerüstet werden müssen und auf eine elektrische oder pneumatische Energiequelle angewiesen und bedingt durch einen derartigen Kraftantrieb teure und aufwendige Schutzvorkehrungen für die Bedienungsperson vorgeschrieben sind. Der Einsatz dieser Pressen ist nur bei der Herstellung von Werkstücken mit großen Stückzahlen wirtschaftlich.

Der Erfindung liegt die Aufgabe zugrunde, eine Stanzpresse der gattungsgemäßen Art mit Handantrieb zu entwickeln, die sich durch eine Kompaktbauweise auszeichnet, einen Transport der Presse in einer Werkzeugtasche ermöglicht und eine wirtschaftliche Herstellung von Stanzteilen auch bei kleinen Stückzahlen gewährleistet.

Diese Aufgabe wird erfindungsgemäß gelöst durch eine Stanzpresse gemäß dem Patentanspruch 1.

Die weiteren Unteransprüche beinhalten vorteilhafte und zweckmäßige Weiterbildungen der erfindungsgemäßen Stanzpressen.

Die Erfindung ist nachstehend anhand von Zeichnungsfiguren erläutert, die folgendes darstellen:
- Fig. 1: einen profilierten Flachstab eines Beschlags für eine Schließeinrichtung eines Aluminiumfensters,
- Fig. 2: die Enden von zwei in einer Folgestanzung von einem Flachstabprofil abgelängten und gelochten Flachstäben,
- Fig. 3: einen Längsschnitt einer Stanzpresse in stehender oder liegender Position zum Ablängen und Lochen von Flachstäben nach den Figuren 1 und 2 für Fensterbeschläge,
- Fig. 4: einen Querschnitt der Stanzpresse nach Linie IV-IV der Figur 3,
- Fig. 5: eine Vorderansicht der in liegender Position an einer Tischplatte montierten Stanzpresse,
- Fig. 6: einen Drehkippfensterbeschlag mit einer Treibstange und einer Stulpstange vor der Bearbeitung, die
- Fign. 7a: das Ende eines fertig bearbeiteten
- und 7 b: Drehkippbeschlages mit einem Durchgangsloch der Stulpstange in einem Teillängsschnitt und in der Draufsicht,
- Fig. 8: das Ende des Drehkippbeschlags nach Figur 7 mit einem Senkloch der Stulpstange,
- Fig. 9: eine teilweise geschnittene Seitenansicht einer weiteren Ausführungsform einer Stanzpresse zur Ablängung und Endenbearbeitung der Enden der an einem Ende miteinander verbundenen Treibstange und der Stulpstange eines Drehkippfensterbeschlags,
- Fig. 10: einen Querschnitt der Stanzpresse nach Linie X-X der Figur 9,
- Figur 11: die Stanzpresse nach Figur 9 mit einem eingelegten Drehkippbeschlag vor der ersten Stanzung und
- Fig. 12: die Stanzpresse nach Figur 9 mit dem um 180° zu Figur 11 verdreht eingelegten Drehkippbeschlag nach dem Lochen und Ablängen der Stulpstange und vor dem Ablängen der Treibstange durch eine zweite Stanzung.

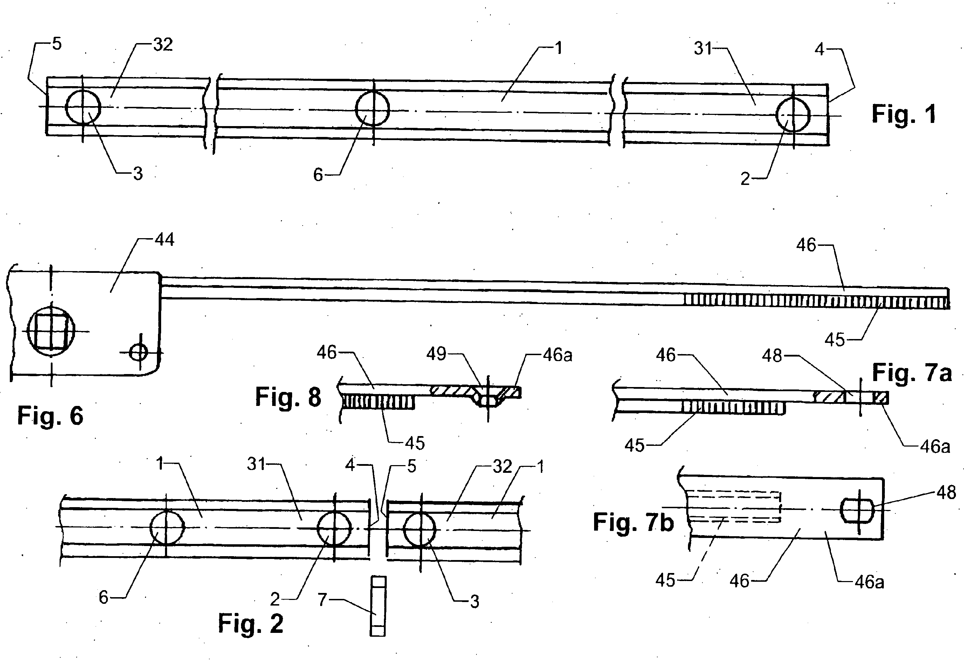

Figur 1 zeigt einen profilierten Flachstab 1 aus Aluminium oder Kunststoff eines Beschlags für eine Schließeinrichtung eines Aluminiumfensters. Der Flachstab 1 ist mit zwei Löchern 2,3 versehen, die mit gleichem Abstand von den beiden Endkanten 4,5 des Flachstabes 1 angeordnet sind. Ferner besitzt der Flachstab 1 ein weiteres Loch 6 für Montagezwecke zwischen den beiden Löchern 2,3.

Figur 2 veranschaulicht die Enden 32,31 von zwei in einer Folgestanzung von einem Flachstabprofil abgelängten und gelochten Flachstäben 1 mit dem beim Stanzen anfallenden Abfallstück 7.

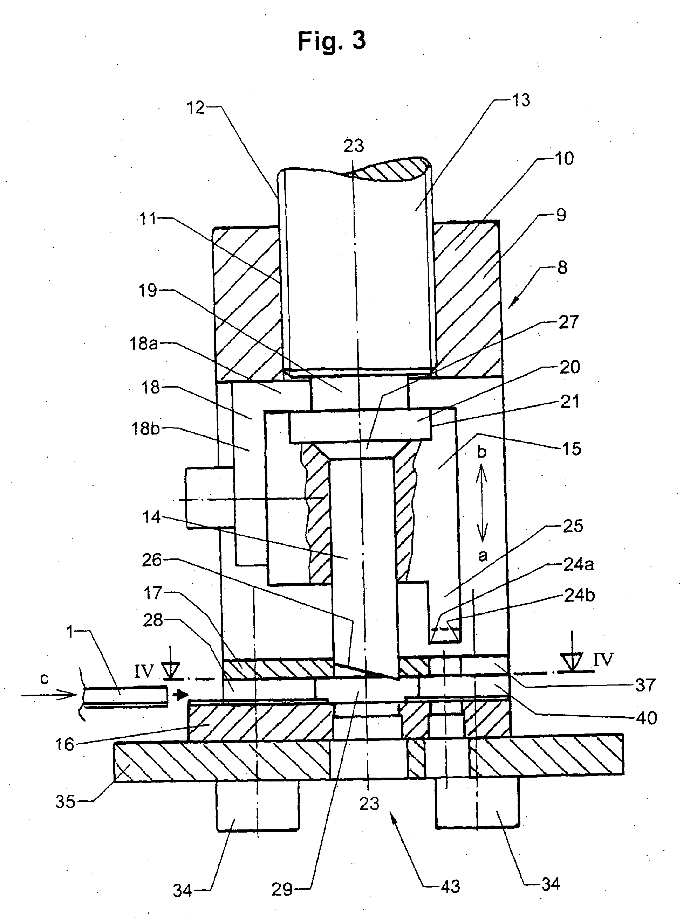

Die als Tischpresse ausgebildete Stanzpresse 8 nach den Figuren 3 bis 5 zur Ablängung und Endenbearbeitung von Flachstäben 1 für Fensterbeschläge gemäß den Figuren 1 und 2 weist ein Pressengehäuse 9 auf mit integrierter Spindelmutter 10 mit einer Gewindebohrung 11 für die mit einem Feingewinde 12 versehene Antriebsspindel 13 für einen Lochstempel 14 und einen Ablängstempel 15, die mit einer Matrize 16 zusammenwirken und in in dem Pressengehäuse 9 ausgebildeten Führungen sowie einer unter dem Lochstempel 14 und dem Ablängstempel 15 angeordneten Führungsplatte 17 verschiebbar sind.

Der Ablängstempel 15 ist durch einen Mitnehmerhaken 18 mit der Antriebsspindel 13 verbunden, wobei der eine Hakenschenkel 18a einen auf einem Zapfen 19 der Antriebsspindel 13 angeordneten Mitnehmerpilz 20 übergreift und der andere Hakenschenkel 18b an dem Ablängstempel 15 festgeschraubt ist. Der Mitnehmerpilz 20 der Antriebsspindel 13 greift mit Spiel in eine Ausnehmung 21 des Ablängstempels 15 ein, der in gegenüberliegenden Fenstern 22 des Pressengehäuses 9 zur Ausführung einer Hubbewegung a, b in Richtung der Spindelachse 23-23 senkrecht zur Führungsplatte 17 und zur Matrize 16 verschiebbar geführt ist.

Der Ablängstempel 15 weist eine oder mehrere Schneidkanten 24a, 24b auf, die zur Spindelachse 23-23 nach außen versetzt an einem Halter 25 des Ablängstempels 15 angebracht sind. Der auf der Spindelachse 23-23 angeordnete Lochstempel 14, der eine umlaufende Schneidkante 26 aufweist, ist mit einem Stempelkopf 27 zentrisch in den Ablängstempel 15 eingesetzt und stützt sich mit dem Stempelkopf 27 gegen den Mitnehmerpilz 20 der Antriebsspindel 13 ab.

Zwischen Führungsplatte 17 und Matrize 16 ist ein Durchgangskanal 28 zum Einschieben von Flachstäben 1 unter die Stanzwerkzeuge 14,15 ausgebildet. Die Schneidkanten 26, 24a, 24b der in Einschieberichtung c der Flachstäbe 1 über dem Durchgangskanal 28 und der Führungsplatte 17 in Reihe hintereinander angeordneten Stanzwerkzeuge 14,15 sind zur wahlweisen Ausführung eines Folgeschnitts oder eines Einzelschnitts in Richtung der Spindelachse 23-23 gegeneinander versetzt angeordnet.

Zwischen der Führungsplatte 17 und der Matrize 16 ist unter dem Lochstempel 14 ein um 90° gegenüber dem Durchgangskanal 28 verdrehter weiterer Einschiebekanal 29 für Flachstäbe 1 mit einem Anschlag 30 zum Stanzen des Loches 3 des Endes 32 der Flachstäbe in einem bestimmten Abstand von der Endkante 5 angeordnet. Es besteht auch die Möglichkeit, den Flachstab 1 zum Stanzen des Loches 3 im Kanal 28 mittels eines beweglichen Anschlags zu positionieren.

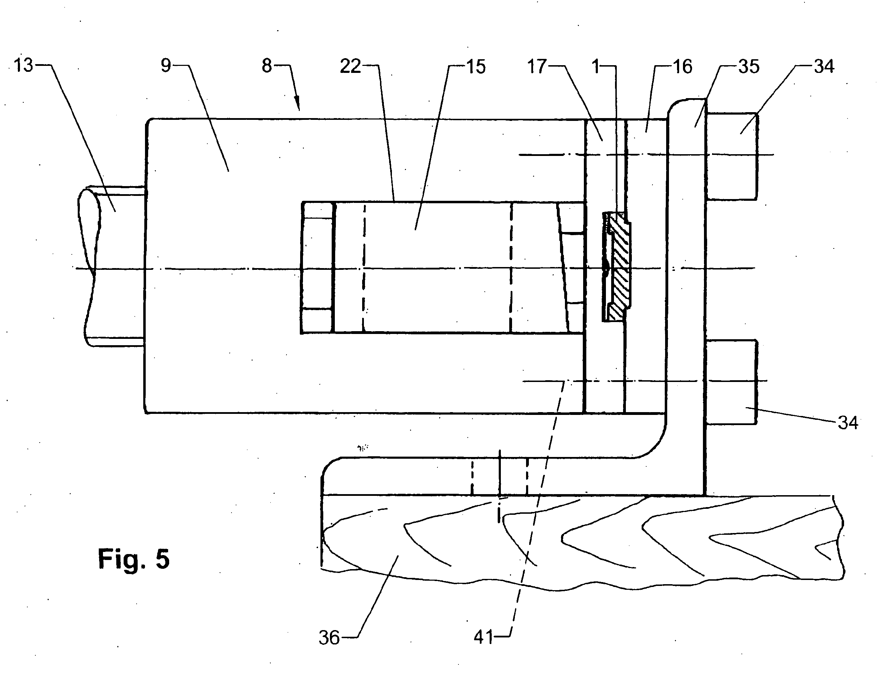

Pressengehäuse 9, Führungsplatte 17 und Matrize 16 sind durch Paßstifte 33 gegeneinander ausgerichtet und fixiert, und das Pressengehäuse 9 mit der Führungsplatte 17 und der Matrize 16 ist mittels Schrauben 34 an einem Konsolenwinkel 35 angebracht, der eine Befestigung der Stanzpresse 8 in stehender Position gemäß Figur 3 oder liegender Position gemäß Figur 5 an einer Platte 36, beispielsweise einer Tischplatte ermöglicht.

Die Führungsplatte 17 und die Matrize 16 weisen Sichtöffnungen 37,38 zum Erkennen von Anrißmarkierungen auf den Flachstäben 1 auf, wobei der Sichtöffnung 38 in der Matrize 16 eine entsprechende vergrößerte Sichtöffnung 39 im Konsolenwinkel 35 zugeordnet ist.

Die vorbeschriebene Kopplung der Antriebsspindel 13 mit den Stanzwerkzeugen 14,15 bewirkt, daß nur die Translationsbewegung a,b der Antriebsspindel auf die Stanzwerkzeuge übertragen wird.

Bei kleineren Preßkräften wird die Stanzpresse 8 mit dem Konsolenwinkel 35 bevorzugt in stehender Position gemäß Figur 3 an einer Platte 36 befestigt. Für den manuellen Antrieb der Presse wird an dem nach oben zeigenden Ende der Antriebsspindel 13 ein einfacher, nicht dargestellter Knebelgriff oder ein handelsüblicher Rasthebel mit einem Hebelradius bis zu 250 mm befestigt.

Bei größeren Preßkräften kommt die Stanzpresse 8 in liegender Position gemäß Figur 5 zum Einsatz, in der die Antriebsspindel 13 auf die Bedienungsperson gerichtet ist. Die Antriebsspindel wird mit einem kreuzförmigen Knebelgriff oder einem doppelarmigen Rasthebel mit einem Hebelradius bis zu 500 mm ausgerüstet. Die beispielsweise gegenüber einem Trapezgewinde wesentlich kleinere Steigung des Feingewindes der Antriebsspindel in Kombination mit dem bei liegender Anordnung der Stanzpresse größeren Hebelradius eines kreuzförmigen Knebelgriffs oder eines doppelarmigen Rasthebels für eine manuelle Betätigung der Antriebsspindel ermöglicht eine Preßkraft bis zu 50.000 N. Die liegende Betriebsposition der Stanzpresse hat ferner den Vorteil, daß ein Abfallstau vermieden wird.

Ferner besteht die Möglichkeit, die Antriebsspindel der Stanzpresse durch einen Elektromotor oder eine druckmittelbetätigte Zylinder-Kolbeneinheit anzutreiben, wobei bei einem Druckmittelantrieb die Gewindespindel durch ein glattes Kolbenstangenende ersetzt wird.

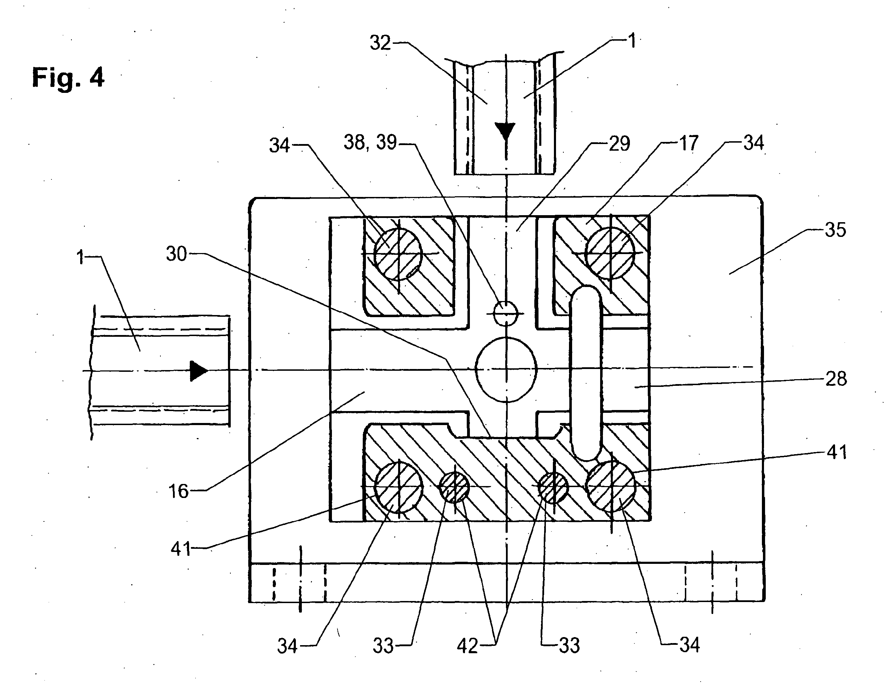

Zum Ablängen und Lochen von Flachstäben 1 wird das Flachstabmaterial zunächst in Pfeilrichtung c in den Durchgangskanal 28 der Stanzpresse 8 etwas über die vordere Schneidkante 24a des Ablängstempels 15 eingeschoben. Durch Betätigen der Antriebsspindel 13 erfolgt zuerst die Lochung 2 und dann erfolgt der Schnitt für die Endkante 4 des Stabendes 31, wobei durch die Sichtöffnung 37 in der Führungsplatte 17 eine entsprechende Anrißmarkierung auf dem Flachstabmaterial für die Lochung 2 beziehungsweise die Endkante 4 erkennbar ist (Figuren 1 und 3). Danach werden der Lochstempel 14 und der Ablängstempel 15 durch Betätigen der Antriebsspindel 13 wieder in die Ausgangsposition angehoben beziehungsweise zurückgezogen. Anschließend wird das Flachstabmaterial bis zur Position des Loches 6 durch den Durchgangskanal 28 weiter vorgeschoben, wobei die Anrißmarkierung für das Loch 6 durch die Sichtöffnung 38 in der Matrize 16 erkennbar ist. Es ist auch möglich, vor der Ausgangsseite 40 des Durchgangskanals 28 die Position des Loches 6 an einem handelsüblichen Maßstab abzulesen bzw. einzustellen. Zum Ausstanzen des Loches 6 aus dem Flachstabmaterial ist nur ein Teilhub der Stanzpresse 8 erforderlich. Die beiden Schneidkanten 24a, 24b des Ablängstempels 15 sind so weit gegenüber der Schneidkante 26 des Lochstempels 14 zurückversetzt, daß das Loch 6 unabhängig vom Ablängen des Flachstabmaterials gestanzt werden kann. Danach werden der Lochstempel 14 und der Ablängstempel 15 wieder in die Ausgangsposition zurückgezogen und das Flachstabmaterial wird bis zu durch die Sichtöffnung 37 in der Führungsplatte 17 erkennbaren Anrißmarkierungen für die Herstellung der Schnitte für die Endkante 5 des vorliegenden Flachstabes 1 und die Endkante 4 des folgenden Flachstabes 1 vorgeschoben. Anschließend wird durch Betätigung der Antriebsspindel 13 das Loch 2 des folgenden Flachstabs 1 in dessen Ende 31 gestanzt und es werden der Schnitt für die Endkante 4 des Folgestabes sowie der Schnitt für die Endkante 5 des vorliegenden Flachstabes 1 ausgeführt (Fig. 2). Schließlich wird das ungelochte Ende 32 des abgelängten Flachstabes 1 in den Einschiebekanal 29 der Stanzpresse 8 bis zu dem Anschlag 30 eingeschoben und danach das Loch 3 in das Stabende 32 gestanzt (Fign. 2 und 4).

Die Gewindebohrung 11 in der Spindelmutter 10 des Pressengehäuses 9 für die Antriebsspindel 13, die Führungen 22 im Pressengehäuse 9 für die Stanzwerkzeuge 14, 15, die Gewindebohrungen 41 im Pressengehäuse 9 für die Schrauben 34 zu dessen Befestigung an dem Konsolenwinkel 35 und die Bohrungen 42 im Pressengehäuse 9 für die Paßstifte 33 sind nach einer Seite 43 des Pressengehäuses 9 ausgerichtet. Dadurch sind die verschiedenen Bearbeitungsvorgänge bei der Herstellung des Pressengehäuses in einer gleichbleibenden Ein- oder Aufspannposition des Pressengehäuses auf einer Bearbeitungsmaschine durchführbar.

Die Führungsplatte 17 für die Stanzwerkzeuge 14, 15 ist derart gestaltet, daß bei einer Einzelanfertigung der Platte alle Bearbeitungsvorgänge in einer gleichbleibenden Ein- oder Aufspannposition auf einer Bearbeitungsmaschine durchführbar sind.

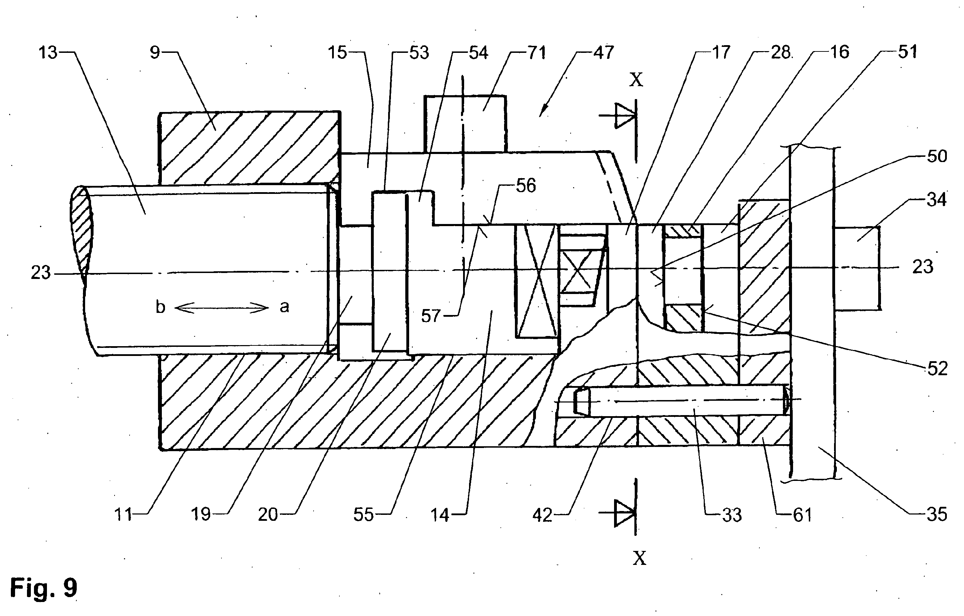

Fig. 6 zeigt einen Drehkippfensterbeschlag 44 mit einer Treibstange 45 und einer Stulpstange 46, die an einem Ende miteinander verbunden sind, vor dem Lochen und Ablängen der Stulpstange 46 und vor dem Ablängen der Treibstange 45 auf der Stanzpresse 47 nach den Fign. 9 bis 12. Aus den Fign. 7a und 7b ist der fertig bearbeitete Drehkippfensterbeschlag 44 ersichtlich, dessen Stulpstange 46 ein Ende 46a mit einem glatten Durchgangsloch 48 besitzt, und Fig. 8 veranschlaulicht den fertigen Drehkippfensterbeschlag 44 mit einem aus dem Ende 46a der Stulpstange 46 ausgestanzten Senkloch 49.

Hauptbauteile der als Tischpresse ausgebildeten Stanzpresse 47 nach den Fign. 9 bis 12 zur Fertigstellung von Drehkippfensterbeschlägen 44 gemäß den Fign. 6 bis 8 sind das Pressengehäuse 9, die Antriebsspindel 13, der Lochstempel 14, der Ablängstempel 15, die Führungsplatte 17 für die beiden Stempel, die Matrize 16, der Konsolenwinkel 35 sowie ein zwischen der Oberseite 50 der Matrize 16 und der Führungsplatte 17 ausgebildeter Kanal 28 und ein weiterer Kanal 51 zwischen der Unterseite 52 der Matrize 16 und dem Konsolenwinkel 35 zum Einschieben der Treibstange 45 und der Stulpstange 46 eines Drehkippfensterbeschlages 44 für die Stanzbearbeitung der beiden Stangen 45, 46.

Der an dem Zapfen 19 der Antriebsspindel 13 angeordnete Mitnehmerpilz 20 greift mit Spiel in eine Ausnehmung 53 des Ablängstempels 15 ein. Der Lochstempel 14 faßt mit einer Mitnehmernase 54 in die Ausnehmung 53 des Ablängstempels 15 und liegt an dem Mitnehmerpilz 20 der Antriebsspindel 13 an. Ablängstempel 15 und Lochstempel 14 sind durch Schrauben 71 miteinander verbunden. Diese Kopplung der Antriebsspindel 13 mit den Stanzwerkzeugen 14, 15 bewirkt, daß nur die Translationsbewegung a, b der Antriebsspindel auf die Stanzwerkzeuge übertragen wird.

Der Lochstempel 14 und der Ablängstempel 15, die eine zylindrische oder eckige Form aufweisen können, sind in entsprechenden Führungen 55, 56 des Pressengehäuses 9 zur Ausführung einer Hubbewegung a, b in Richtung der Spindelachse 23-23 senkrecht zur Führungsplatte 17 und zur Matrize 16 verschiebbar'geführt. Die Innenfläche 57 des Ablängstempels 15 bildet zusammen mit der Führung 56 eine Verdrehsicherung für den Ablängstempel 15 und den Lochstempel 14.

Pressengehäuse 9 und Führungsplatte 17 sind einteilig ausgebildet.

Bei einer weiteren Ausführungsform der Stanzpresse 47 ist die Führungsplatte 17 als gesondertes Bauteil in das Pressengehäuse 9 eingebaut.

Das Pressengehäuse 9 kann eine zylindrische oder eckige Form aufweisen.

Bei einer zylindrischen Form des Pressengehäuses 9 und einer einteiligen Ausbildung von Pressengehäuse 9 und Führungsplatte 17 bilden ein Zentrierzapfen 58 an der Unterseite 59 der Führungsplatte 17 und eine Verdrehsicherung 60 zwischen Führungsplatte 17 und Matrize 16 eine paßgerechte Fixierung für eine Drehbearbeitung des Pressengehäuses 9.

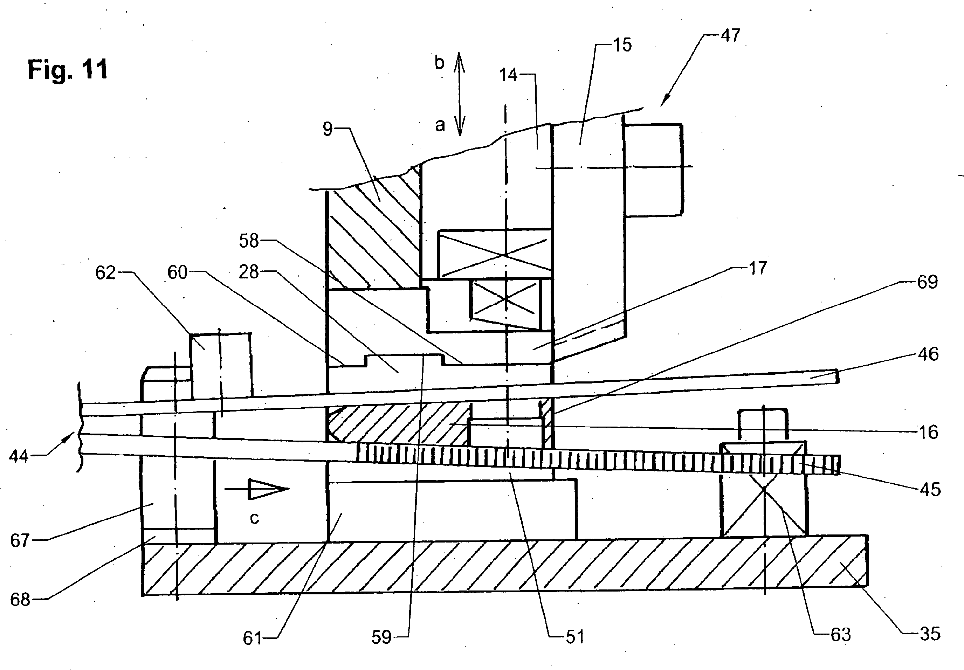

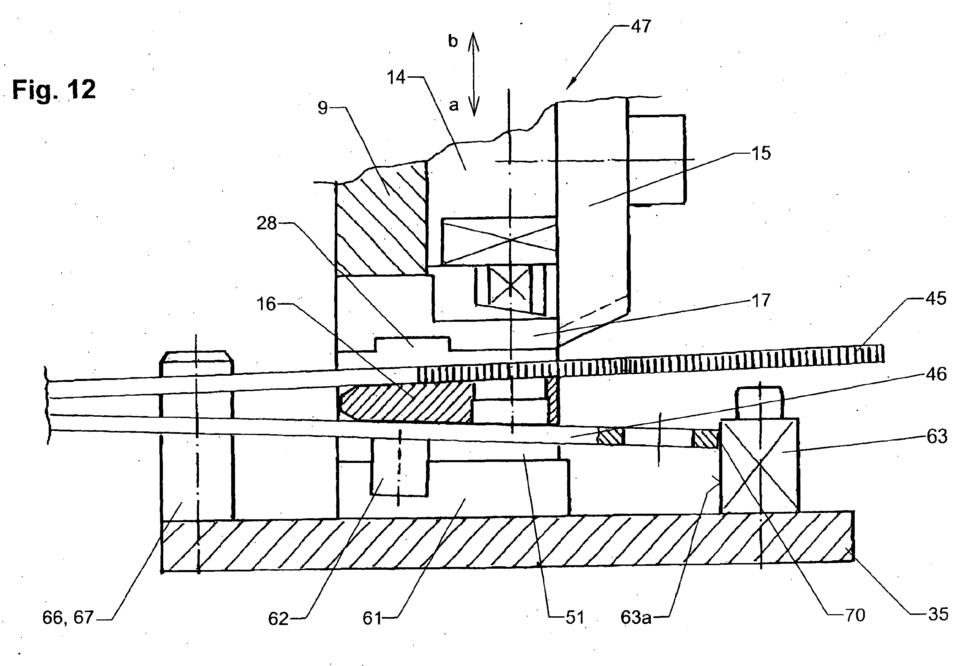

Ein Distanzstück 61 zwischen Matrize 16 und Konsolenwinkel 35 ermöglicht einen entsprechend großen Durchtrittsquerschnitt des unteren Durchgangskanals 51 der Stanzpresse 47 bei der Stanzbearbeitung eines Drehkippfensterbeschlages 44 mit einer Erhöhung 62 an der Stulpstange 46 und/oder der Treibstange 45, wobei bei Erhöhungen 62 an der Stulpstange 46 und der Treibstange 45 der obere Durchgangskanal 28 einen entsprechend großen Durchtrittsquerschnitt wie der untere Durchgangskanal 51 aufweisen muß (Fign. 11 und 12).

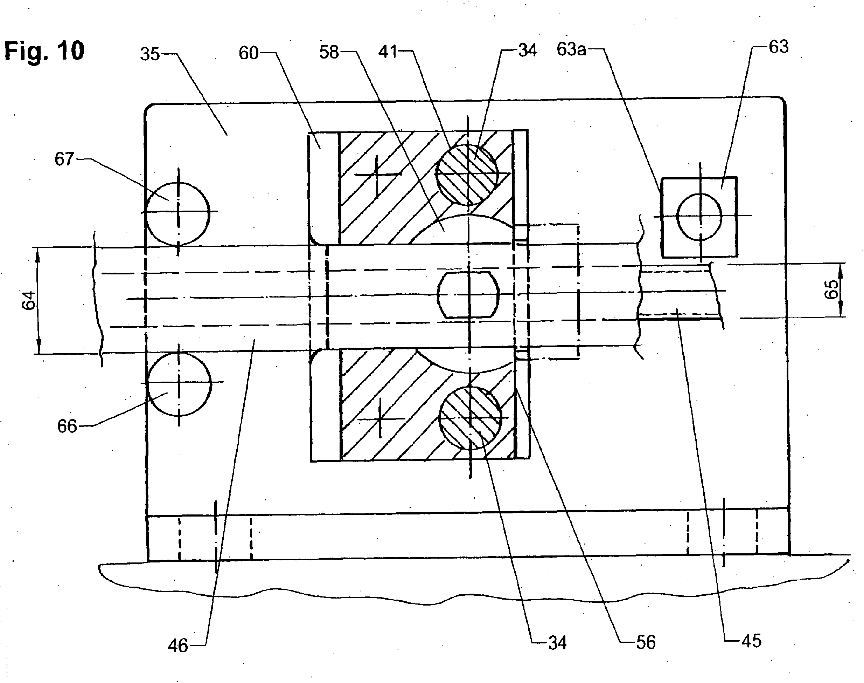

An dem Konsolenwinkel 35 ist ein Anschlag 63 angebracht, der bei der Ablängung und Endenbearbeitung einer Stulpstange 46 eines Drehkippfensterbeschlags 44 mit einer bestimmten Breite 64 und einer Treibstange 45 des Beschlags 44 mit einer gegenüber der Stulpstange 46 verringerten Breite 65 nur bei der breiteren Stulpstange 46 zur Wirkung kommt (Fign. 10 und 12).

Der Konsolenwinkel 35 ist mit einem Führungsbolzen 66 und einem federnd ausgebildeten Klemmbolzen 67 zur Führung der Stulpstange 46 eines Drehkippfensterbeschlages 44 ausgestattet, die gegenüber der Treibstange 45 des Beschlags eine größere Breite 64 aufweist. Durch die Bolzen 66, 67 wird das Einschieben und Positionieren des Beschlags 44 erleichtert und die Genauigkeit der Stanzung wesentlich verbessert. Als federnder Bolzen 67 kann ein handelsübliches Komplettteil oder ein Bolzen mit einem federnden Zwischenring 68 verwendet werden.

Zur Stanzbearbeitung des Drehkippfensterbeschlags 44 auf der Presse 47 werden die Stulpstange 46 und die Treibstange 45 von Hand leicht gespreizt und dann wird der Beschlag 44 mit der Stulpstange 46 in den oberen Durchgangskanal 28 und mit der Treibstange 45 in den unteren Durchgangskanal 51 eingeschoben, wobei die zuvor angebrachte Anrißmarkierung auf der Außenseite der Stulpstange 46 mit der Schneidkante 69 der Matrize 16 deckungsgleich übereinanderstimmen muß (Fig. 11). In dieser Bearbeitungsposition wird der Beschlag 44 mit der Stulpstange 46 durch den Führungsbolzen 66 und den Klemmbolzen 67 fixiert. Anstatt der Anrißmarkierung kann auch eine handelsübliche Meßeinrichtung verwendet werden.

Durch Betätigen der Antriebsspindel 13 wird die Stulpstange 46 durch den Stanzhub a von Ablängstempel 15 und Lochstempel 14 in einem Arbeitsgang abgelängt und gelocht. Danach werden der Ablängstempel 15 und der Lochstempel 14 durch Betätigen der Antriebsspindel 13 zur Freigabe des Beschlags 44 in Pfeilrichtung b angehoben. Darauffolgend wird der Beschlag 44 der Stanzpresse 47 von Hand entnommen und dann erneut in einer um 180° gedrehten Position mit der Treibstange 45 in den oberen Durchgangskanal 28 und der Stulpstange 46 so weit in den unteren Durchgangskanal 51 eingeschoben, bis die Stulpstange 46 mit der Stirnseite 70 an der Anschlagkante 63a des Anschlags 63 anliegt. Bei erneuter Betätigung der Antriebsspindel 13 wird dann die Treibstange 45 immer im gleichen Abstand zur Stirnseite 70 der Stulpstange 46 abgelängt.

Bei der Befestigung der Stanzpresse 47 an dem Konsolenwinkel 35 mittels der Schrauben 34 werden das Pressengehäuse 9 mit der Führungsplatte 17, die Matrize 16 und das bzw. die Distanzstücke 61 durch Paßstifte 33 gegeneinander fixiert.

Das Pressengehäuse 9 ist derart gestaltet, daß die Gewindebohrung 11 für die Antriebsspindel 13, die Führungen 55, 56 für den Lochstempel 14 und den Ablängstempel 15, die glatten Bohrungen 42 für die Paßstifte 33 und die Gewindebohrungen 41 für die Befestigungsschrauben 34 nach einer Seite des Pressengehäuses 9 ausgerichtet sind. Dadurch können die verschiedenen Bearbeitungsvorgänge bei der Herstellung des Pressengehäuses in einer gleichbleibenden Ein- oder Aufspannposition des Pressengehäuses auf einer Bearbeitungsmaschine durchgeführt werden.

### Bezugzeichen

- 1: Flachstab
- 2: Loch in 1
- 3: Loch in 1
- 4: Endkante von 1
- 5: Endkante von 1
- 6: Loch in 1
- 7: Abfallstück
- 8: Stanzpresse (Fign. 3-5)
- 9: Pressengehäuse
- 10: Spindelmutter
- 11: Gewindebohrung in 10
- 12: Feingewinde von 13
- 13: Antriebsspindel
- 14: Lochstempel
- 15: Ablängstempel
- 16: Matrize
- 17: Führungsplatte
- 18: Mitnehmerhaken
- 18a: Schenkel von 18
- 18b: Schenkel von 18
- 19: Zapfen von 13
- 20: Mitnehmerpilz an 19
- 21: Ausnehmung von 15
- 22: Fenster in 9
- 23-23: Spindelachse von 13
- 24a: Schneidkante von 15
- 24b: Schneidkante von 15
- 25: Halter von 15
- 26: Schneidkante von 14
- 27: Stempelkopf von 14
- 28: Durchgangskanal für 1 unter 14, 15
- 29: Einschiebekanal für 1 unter 14
- 30: Anschlag von 29
- 31: Ende von 1
- 32: Ende von 1
- 33: Paßstift
- 34: Befestigungsschraube für 9, 17, 16 an 35
- 35: Konsolenwinkel
- 36: Platte zur Befestigung von 8, 35
- 37: Sichtöffnung in 17
- 38: Sichtöffnung in 16
- 39: Sichtöffnung in 35
- 40: Ausgangsseite von 28
- 41: Gewindebohrung in 9 für 34
- 42: Bohrung in 9 für 33
- 43: Seite von 9
- 44: Drehkippfensterbeschlag
- 45: Treibstange von 44
- 46: Stulpstange von 44
- 46a: Ende von 46
- 47: Stanzpresse (Fign. 9-12)
- 48: Durchgangsloch in 46a
- 49: Senkloch in 46a
- 50: Oberseite von 16
- 51: Kanal zwischen 52 und 35
- 52: Unterseite von 16
- 53: Ausnehmung in 15
- 54: Mitnehmernase an 14
- 55, 56: Führung für 14, 15 in 9
- 57: Innenfläche von 15
- 58: Zentrierzapfen an 59.
- 59: Unterseite von 17
- 60: Verdrehsicherung zwischen 17 und 16
- 61: Distanzstück zwischen 16 und 35
- 62: Erhöhung an 46 von 44
- 63: Anschlag an 35
- 63a: Anschlagkante von 63
- 64: Breite von 46
- 65: Breite von 45
- 66: Führungsbolzen an 35
- 67: Klemmbolzen an 35
- 68: Federring von 67
- 69: Schneidkante von 16
- 70: Stirnseite von 46
- 71: Verbindungsschraube von 14, 15

- a, b: Hubbewegung von 14, 15
- c: Einschieberichtung von 1

## Patentansprüche

1. Stanzpresse, insbesondere zur Ablängung und Endbearbeitung von Flachstabmaterial für Fensterbeschläge, mit einer handbetätigten oder motorisch angetriebenen Spindel für den Hubantrieb eines oder mehrerer mit einer Matrize (16) zusammenwirkenden Stanzwerkzeuge wie Lochstempel (14) und Ablängstempel (15), die in im Pressengehäuse (9) ausgebildeten Führungen (22) sowie in einer unter den Stanzwerkzeugen (14, 15) angeordneten Führungsplatte (17) verschiebbar sind, wobei ferner zwischen Führungsplatte (17) und Matrize (16) ein Durchgangskanal (28) zum Einschieben von Flachstäben (1) unter die Stanzwerkzeuge (14, 15) ausgebildet ist, **dadurch gekennzeichnet, daß** die als Tischpresse ausgebildete Stanzpresse (8) ein Pressengehäuse (9) mit integrierter Spindelmutter (10) mit einer Gewindebohrung (11) für die mit einem Feingewinde (12) versehene Antriebsspindel (13) für die Stanzwerkzeuge aufweist, daß die Antriebsspindel (13) und die Stanzwerkzeuge (14, 15) derart miteinander gekoppelt sind, daß nur die Translationsbewegung (a, b) der Spindel (13) auf die Werkzeuge (14, 15) übertragen wird, daß Pressengehäuse (9), Führungsplatte (17) und Matrize (16) durch Paßstifte (33) gegeneinander ausgerichtet sind und daß das Pressengehäuse (9) mit der Führungsplatte (17) und der Matrize (16) mittels Schrauben (34) an einem Konsolenwinkel (35) angebracht ist zur Befestigung der Stanzpresse (8) in stehender oder liegender Position an einer Platte (36), insbesondere einer Tischplatte, wobei die Gewindebohrung (11) der Spindelmutter (10) des Pressengehäuses (9) für die Antriebsspindel (13), die Führungen (22) im Pressengehäuse (9) für die Stanzwerkzeuge (14, 15), die Gewindebohrungen (41) im Pressengehäüse (9) für die Schrauben (34) zu dessen Befestigung an dem Konsolenwinkel (35) und die Bohrungen (42) im Pressengehäuse (9) für die Paßstifte (33) nach einer Seite (43) des Pressengehäuses (9) ausgerichtet sind und damit die verschiedenen Bearbeitungsvorgänge bei der Herstellung des Pressengehäuses in einer gleichbleibenden Ein- oder Aufspannposition des Pressengehäuses auf einer Bearbeitungsmaschine durchführbar sind.

2. Stanzpresse nach Anspruch 1, **dadurch gekennzeichnet, daß** der Ablängstempel (15) durch mindestens einen Mitnehmerhaken (18) mit der Antriebsspindel (13) verbunden ist, wobei der mindestens eine Hakenschenkel (18a) einen auf einem Zapfen (19) der Antriebsspindel (13) angeordneten Mitnehmerpilz (20) übergreift und der andere Hakenschenkel (18b) an dem Ablängstempel (15) festgeschraubt ist oder eine Einheit bildet und daß der Mitnehmerpilz (20) der Antriebsspindel (13) mit Spiel in eine Ausnehmung (21) des Ablängstempels (15) eingreift, der in gegenüberliegenden Fenstern (22) des Pressengehäuses (9) zur Ausführung einer Hubbewegung (a, b) in Richtung der Spindelachse (23-23) senkrecht zur Führungsplatte (17) und zur Matrize (16) verschiebbar geführt ist.

3. Stanzpresse nach Anspruch 1 und 2, **dadurch gekennzeichnet, daß** der Ablängstempel (15) eine oder mehrere Schneidkanten (24a, 24b) aufweist, die zur Spindelachse (23-23) nach außen versetzt an einem Halter (25) des Ablängstempels (15) angebracht sind, der auf der Spindelachse (23-23) angeordnete Lochstempel (14), der eine umlaufende Schneidkante (26) aufweist, mit einem Stempelkopf (27) zentrisch in den Ablängstempel (15) eingesetzt ist und daß sich der Lochstempel (14) mit dem Stempelkopf (27) gegen den Mitnehmerpilz (20) der Antriebsspindel (13) abstützt.

4. Stanzpresse nach einem der Ansprüche 1 bis 3, **dadurch gekennzeichnet, daß** die Schneidkanten (26, 24a, 24b) der in Einschieberichtung (c) der Flachstäbe (1) über dem Durchgangskanal (28) und der Führungsplatte (17) in Reihe hintereinander angeordneten Stanzwerkzeuge (14, 15) zur Ausführung eines Folgeschnitts oder eines Einzelschnitts in Richtung der Spindelachse (23-23) gegeneinander versetzt angeordnet sind.

5. Stanzpresse nach einem der Ansprüche 1 bis 4, **gekennzeichnet durch** einen zwischen Führungsplatte (17) und Matrize (16) unter dem Lochstempel (14) um 90° gegenüber dem Durchgangskanal (28) verdreht angeordneten weiteren Einschiebekanal (29) für Flachstäbe (1) mit einem Anschlag (30) zum Lochen eines Endes (31, 32) der Flachstäbe (19) in einem bestimmten Abstand von deren Endkante (4, 5).

6. Stanzpresse nach einem der Ansprüche 1 bis 5, **dadurch gekennzeichnet, daß** die Führungsplatte (17) und die Matrize (16) Sichtöffnungen (37, 38) zum Erkennen von Anrißmarkierungen auf den Flachstäben (1) aufweisen, wobei der Sichtöffnung (38) in der Matrize (16) eine entsprechende vergrößerte Sichtöffnung (39) im Konsolenwinkel (35) zugeordnet ist.

7. Stanzpresse nach Anspruch 1 zur Ablängung und Endenbearbeitung von zwei an einem Ende miteinander verbundenen Flachstäben, insbesondere eines Fensterbeschlages, **dadurch gekennzeichnet, daß** an einem Zapfen (19) der Antriebsspindel (13) ein Mitnehmerpilz (20) angeordnet ist, der mit Spiel in eine Ausnehmung (53) des Ablängstempels (15) eingreift, daß der Lochstempel (14) mit einer Mitnehmernase (54) in die Ausnehmung (53) des Ablängstempels (15) einfaßt und an dem Mitnehmerpilz (20) der Antriebsspindel (13) anliegt, und daß der Ablängstempel (15) mit dem Lochstempel (14) fest verbunden ist, daß der Lochstempel (14) und der Ablängstempel (15), die eine zylindrische oder eckige Form aufweisen, in entsprechenden Führungen (55, 56) des Pressengehäuses (9) zur Ausführung einer Hubbewegung (a, b) in Richtung der Spindelachse (23-23) senkrecht zur Führungsplatte (17) und zur Matrize (16) verschiebbar geführt sind, daß die Innenfläche (57) des Ablängstempels (15) zusammen mit der Führung (56) eine Verdrehsicherung für den Ablängstempel (15) und den Lochstempel (14) bilden, und daß zwischen der Oberseite (50) der Matrize (16) und der Führungsplatte (17) sowie zwischen der Unterseite (52) der Matrize (16) und dem Konsolenwinkel (35) jeweils ein Kanal (28, 51) zum Einschieben eines Flachstabes (45, 46) ausgebildet ist.

8. Stanzpresse nach Anspruch 7, **dadurch gekennzeichnet, daß** das Pressengehäuse (9) und die Führungsplatte (17) einteilig ausgebildet sind.

9. Stanzpresse nach Anspruch 7, **dadurch gekennzeichnet, daß** die Führungsplatte (17) als gesondertes Bauteil in das Pressengehäuse (9) eingebaut ist.

10. Stanzpresse nach einem Ansprüche 7 bis 9, **gekennzeichnet durch** eine zylindrische oder eckige Form des Pressengehäuses (9) .

11. Stanzpresse nach einem der Ansprüche 7 bis 10, **gekennzeichnet durch** einen an der Unterseite (59) der Führungsplatte (17) angeordneten Zentrierzapfen (58) sowie eine Verdrehsicherung (60) zwischen Führungsplatte (17) und Matrize (16) für eine paßgerechte Fixierung bei einer Drehbearbeitung des mit der Führungsplatte (17) einteilig ausgebildeten Pressengehäuses (9).

12. Stanzpresse nach einem der Ansprüche 7 bis 11, **gekennzeichnet durch** mindestens ein zwischen Matrize (16) und Konsolenwinkel (35) eingesetztes Distanzstück (61).

13. Stanzpresse nach einem der Ansprüche 7 bis 12, **gekennzeichnet durch** einen an dem Konsolenwinkel (35) angebrachten Anschlag (63), der bei der Ablängung und Endenbearbeitung einer Stulpstange (46) eines Fensterbeschlages (44) mit einer bestimmten Breite (64) und einer Treibstange (45) des Beschlages (44) mit einer gegenüber der Stulpstange (46) verringerten Breite (65) nur bei der breiteren Stulpstange (46) zur Wirkung kommt.

14. Stanzpresse nach einem der Ansprüche 1 bis 13, **gekennzeichnet durch** die Ausstattung des Konsolenwinkels (35) mit einem Führungsbolzen (66) und einem federnd ausgebildeten Klemmbolzen (67) zur Führung der Stulpstange (46) eines Drehkippfensterbeschlages (44), die gegenüber der Treibstange (45) des Beschlages eine größere Breite (64) aufweist.

## Claims

1. Punching press, in particular for cutting to length and machining the ends of flat bar material for window fittings, with a hand-operated or motor-driven spindle for the lifting drive of one or more punching tools cooperating with a die (16) such as hole punches (14) or sectioning punches (15), which are displaceable in guides (22) configured in the press housing (9) and also in a guide plate (17) arranged below the punching tools (14, 15), wherein moreover between the guide plate (17) and the die (16) a through-channel (28) for inserting flat bars (1) is configured below the punching tools (14, 15), **characterised in that** the punching press (8) configured as a bench press has a press housing (9) with integrated spindle nut (10) with a threaded hole (11) for the drive spindle (13) for the punching tools provided with a fine-pitch thread (12), that the drive spindle (13) and the punching tools (14, 15) are coupled to one another in such a way that only the translatory movement (a, b) of the spindle (13) is transmitted onto the tools (14, 15), that the press housing (9), guide plate (17) and die (16) are oriented to one another by alignment pins (33), and that the press housing (9) is attached with the guide plate (17) and the die (16) to an angle bracket (35) by means of screws (34) to fasten the punching press (8) in an upright or horizontal position on a plate (36), in particular a bench top, wherein the threaded hole (11) of the spindle nut (10) of the press housing (9) for the drive spindle (13), the guides (22) in the press housing (9) for the punching tools (14, 15), the threaded holes (41) in the press housing (9) for the screws (34) for fastening this on the angle bracket (35) and the holes (42) in the press housing (9) for the alignment pins (33) are oriented to one side (43) of the press housing (9), and thus the different machining operations during the production of the press housing can be conducted with the press housing in an unchanging clamping and mounting position on the machining equipment.

2. Punching press according to claim 1, **characterised in that** the sectioning punch (15) is connected to the drive spindle (13) by at least one entrainment hook (18), wherein the at least one hook leg (18a) engages over a mushroom entrainer (20) arranged on a journal (19) of the drive spindle (13) and the other hook leg (18b) is firmly screwed to the sectioning punch (15) or forms a unit, and that the mushroom entrainer (20) of the drive spindle (13) engages with play into a recess (21) of the sectioning punch (15), which is displaceably guided in opposite windows (22) of the press housing (9) to perform a lifting movement (a, b) in the direction of the spindle axis (23-23) perpendicularly to the guide plate (17) and to the die (16).

3. Punching press according to claim 1 and 2, **characterised in that** the sectioning punch (15) has one or more cutting edges (24a, 24b), which are attached to a holder (25) of the sectioning punch (15) in an arrangement outwardly displaced relative to the spindle axis (23-23), the hole punch (14) arranged on the spindle axis (23-23) and having a circumferential cutting edge (25) is inserted centrally with a punch head (27) into the sectioning punch (15), and that the hole punch (14) is supported with the punch head (27) against the mushroom entrainer (20) of the drive spindle (13).

4. Punching press according to one of claims 1 to 3, **characterised in that** the cutting edges (26, 24a, 24b) of the punching tools (14, 15) arranged in rows one behind the other above the through-channel (28) and the guide plate (17) in the direction of insertion (c) of the flat bars (1) are staggered relative to one another in the direction of the spindle axis (23-23) to perform a follow-on cut or a single cut.

5. Punching press according to one of claims 1 to 4, **characterised by** a further insertion channel (28) for flat bars (1), which is arranged below the hole punch (14) between the guide plate (17) and the die (16) and rotated 90° relative to the through-channel (28) and has a stop (30) for slotting an end (31, 32) of the flat bars (19) at a specific distance from their end edge (4, 5).

6. Punching press according to one of claims 1 to 5, **characterised in that** the guide plate (17) and the die (16) have viewing holes (37, 38) for identifying trace markings on the flat bars (1), wherein the viewing hole (38) in the die (16) has an associated corresponding enlarged viewing hole (39) in the angle bracket (35).

7. Punching press according to claim 1 for cutting to length and machining the ends of two flat bars connected to one another at one end, in particular of a window fitting, **characterised in that** arranged on a journal (19) of the drive spindle (13) is a mushroom entrainer (20), which engages with play into a recess (53) of the sectioning punch (15), that the hole punch (14) reaches into the recess (53) of the sectioning punch (15) with an entrainment lug (54) and abuts against the mushroom entrainer (20) of the drive spindle (13), and that the sectioning punch (15) is fixedly connected to the hole punch (14), that the hole punch (14) and the sectioning punch (15), which have a cylindrical or angular shape, are displaceably directed in corresponding guides (55, 56) of the press housing (9) to perform a lifting movement (a, b) in the direction of the spindle axis (23-23) perpendicularly to the guide plate (17) and to the die (16), that the inner surface (57) of the sectioning punch (15) together with the guide (56) form an antitwist locking arrangement for the sectioning punch (15) and the hole punch (14), and that a channel (28, 51) for insertion of a flat bar (45, 46) is respectively configured between the upper side (50) of the die (16) and the guide plate (17) and also between the underside (52) of the die (16) and the angle bracket (35).

8. Punching press according to claim 7, **characterised in that** the press housing (9) and the guide plate (17) are configured in one piece.

9. Punching press according to claim 7, **characterised in that** the guide plate (17) is installed into the press housing (9) as a separate structural part.

10. Punching press according to one of claims 7 to 9, **characterised by** a cylindrical or angular shape of the press housing (9).

11. Punching press according to one of claims 7 to 10, **characterised by** a centring pin (58) arranged on the underside (59) of the guide plate (17) and also an antitwist locking arrangement (60) between the guide plate (17) and the die (16) to secure the press housing (9) configured in one piece with the guide plate (17) with a precise fit during a rotary machining operation.

12. Punching press according to one of claims 7 to 11, **characterised by** at least one spacer piece (61) inserted between the die (16) and the angle bracket (35).

13. Punching press according to one of claims 7 to 12, **characterised by** a stop (63) attached to the angle bracket (35), which during the cutting to length and end machining of a cuff bar (46) of a window fitting (44) with a specific width (64) and a drive bar (45) of the fitting (44) with a reduced width (65) in relation to the cuff bar (46), only comes into effect in the case of the wider cuff bar (46).

14. Punching press according to one of claims 1 to 13, **characterised by** equipping the angle bracket (35) with a guide bolt (66) and a resiliently configured clamping bolt (67) for guidance of the cuff bar (46) of a pivoting tilting window fitting (44), which has a larger width (64) than the drive bar (45) of the fitting.

## Revendications

1. Presse à découper, notamment pour le tronçonnage et l'usinage des extrémités de matériau sous forme de barre plate pour des ferrures de fenêtres, comprenant une vis manoeuvrée manuellement ou entraînée par moteur pour entraîner en déplacement un ou plusieurs outils de découpage coopérant avec une matrice (16), comme un poinçon de perforation (14) et un poinçon de tronçonnage (15) mobiles en translation dans des guides (22) formés dans le carter de presse (9) et dans une plaque de guidage (17) disposée en dessous des outils de découpage (14, 15), un canal de passage (28) étant en outre formé entre la plaque de guidage (17) et la matrice (16) pour introduire des barres plates (1) sous les outils de découpage (14, 15), **caractérisée en ce que** la presse à découper (8) réalisée sous forme de presse de table présente un carter de presse (9) pourvu d'un écrou de vis intégré (10) doté d'un perçage taraudé (11) pour la vis d'entraînement (13) pour les outils de découpage qui est pourvue d'un filetage fin (12), **en ce que** la vis d'entraînement (13) et les outils de découpage (14, 15) sont couplés entre eux de telle sorte que seul le mouvement de translation (a, b) de la vis (13) est transmis aux outils (14, 15), **en ce que** le carter de presse (9), la plaque de guidage (17) et la matrice (16) sont alignés entre eux par des goupilles de position (33) et **en ce que** le carter de presse (9) pourvu de la plaque de guidage (17) et de la matrice (16) est installé au moyen de boulons (34) sur une console en équerre (35) afin de fixer la presse à découper (8) en position verticale ou horizontale sur un plateau (36), notamment un plateau de table, que le perçage taraudé (11) de l'écrou de vis (10) du carter de presse (9) pour la vis d'entraînement (13), les guides (22) dans le carter de presse (9) pour les outils de découpage (14, 15), les perçages taraudés (41) dans le carter de presse (9) pour les boulons (34) pour la fixation de ce carter sur la console en équerre (35) et les perçages (42) dans le carter de presse (9) pour les goupilles de position (33) étant dirigés d'un côté (43) du carter de presse (9), de sorte que les différentes opérations d'usinage lors de la réalisation du carter de presse peuvent être effectuées dans une même position de serrage du carter de presse sur une machine d'usinage.

2. Presse à découper suivant la revendication 1, **caractérisée en ce que** le poinçon de tronçonnage (15) est relié par au moins un crochet entraîneur (18) à la vis d'entraînement (13), la au moins une branche de crochet (18a) enjambant un champignon entraîneur (20) disposé sur un tourillon (19) de la vis d'entraînement (13) et l'autre branche de crochet (18b) étant boulonnée à bloc sur le poinçon de tronçonnage (15) ou formant une unité, et **en ce que** le champignon entraîneur (20) de la vis d'entraînement (13) pénètre avec jeu dans un évidement (21) du poinçon de tronçonnage (15) qui, dans des fenêtres opposées (22) du carter de presse (9), est guidé en translation perpendiculairement à la plaque de guidage (17) et à la matrice (16) afin d'effectuer une course de translation (a, b) dans la direction de l'axe (23-23) de la vis.

3. Presse à découper suivant la revendication 1 ou 2, **caractérisée en ce que** le poinçon de tronçonnage (15) présente un ou plusieurs tranchants (24a, 24b) qui sont installés sur un support (25) du poinçon de tronçonnage (15) en étant décalés vers l'extérieur par rapport à l'axe (23-23) de la vis, **en ce que** le poinçon de perforation (14), qui est disposé sur l'axe (23-23) de la vis et qui présente un tranchant entourant (26), est installé centralement dans le poinçon de tronçonnage (15) par une tête de poinçon (27), et **en ce que** le poinçon de perforation (14) s'appuie par la tête de poinçon (27) contre le champignon entraîneur (20) de la vis d'entraînement (13).

4. Presse à découper suivant l'une des revendications 1 à 3, **caractérisée en ce que** les tranchants (26, 24a, 24b), des outils de découpage (14, 15) disposés en se succédant en alignement au-dessus du canal de passage (28) et de la plaque de guidage (17) dans la direction d'introduction (c) des barres plates (1), sont disposés en étant mutuellement décalés dans la direction de l'axe (23-23) de la vis afin d'effectuer une coupe à suivre ou une coupe individuelle.

5. Presse à découper suivant l'une des revendications 1 à 4, **caractérisée par** un autre canal d'introduction (29) pour des barres plates (1), disposé entre la plaque de guidage (17) et la matrice (16) en dessous du poinçon de perforation (14) en étant tourné à 90° par rapport au canal de passage (28), et pourvu d'une butée (30) pour perforer une extrémité (31, 32) des barres plates (1) à une distance donnée de leur arête terminale (4, 5).

6. Presse à découper suivant l'une des revendications 1 à 5, **caractérisée en ce que** la plaque de guidage (17) et la matrice (16) présentent des regards (37, 38) pour identifier des marquages de tracé sur les barres plates (1), un regard agrandi correspondant (39) dans la console en équerre (35) étant associé au regard (38) dans la matrice (16)

7. Presse à découper suivant la revendication 1 pour le tronçonnage et l'usinage des extrémités de deux barres plates mutuellement assemblées à une extrémité, notamment d'une ferrure de fenêtre, **caractérisée en ce qu'**un champignon entraîneur (20) est disposé sur un tourillon (19) de la vis d'entraînement (13), champignon qui s'engage avec jeu dans un évidement (53) du poinçon de tronçonnage (15), **en ce que** le poinçon de perforation (14) s'insère par un bec entraîneur (54) dans l'évidement (53) du poinçon de tronçonnage (15) et s'applique contre le champignon entraîneur (20) de la vis d'entraînement (13) et **en ce que** le poinçon de tronçonnage (15) est fixement assemblé au poinçon de perforation (14), **en ce que** le poinçon de perforation (14) et le poinçon de tronçonnage (15), qui présentent une forme cylindrique ou polygonale, sont guidés en translation, dans des guides correspondants (55, 56) du carter de presse (9), perpendiculairement à la plaque de guidage (17) et à la matrice (16) afin d'effectuer une course de translation (a, b) dans la direction de l'axe (23-23) de la vis, **en ce que** la face intérieure (57) du poinçon de tronçonnage (15) forme conjointement avec le guidage (56) un blocage en rotation pour le poinçon de tronçonnage (15) et le poinçon de perforation (14), et **en ce qu'**un canal respectif (28, 51) pour l'introduction d'une barre plate (45, 46) est formé entre le dessus (50) de la matrice (16) et la plaque de guidage (17) ainsi qu'entre le dessous (52) de la matrice (16) et la console en équerre (35).

8. Presse à découper suivant la revendication 7, **caractérisée en ce que** le carter de presse (9) et la plaque de guidage (17) sont réalisés d'un seul tenant.

9. Presse à découper suivant la revendication 7, **caractérisée en ce que** la plaque de guidage (17) est installée en tant que pièce séparée dans le carter de presse (9).

10. Presse à découper suivant l'une des revendications 7 à 9, **caractérisée par** une forme cylindrique ou polygonale du carter de presse (9).

11. Presse à découper suivant l'une des revendications 7 à 10, **caractérisée par** un tourillon de centrage (58) disposé sur le dessous (59) de la plaque de guidage (17) ainsi que par un blocage en rotation (60) entre la plaque de guidage (17) et la matrice (16) pour une immobilisation en position précise lors d'un usinage au tour du carter de presse (9) réalisé d'un seul tenant avec la plaque de guidage (17).

12. Presse à découper suivant l'une des revendications 7 à 11, **caractérisée par** au moins un écarteur (61) installé entre la matrice (16) et la console en équerre (35).

13. Presse à découper suivant l'une des revendications 7 à 12, **caractérisée par** une butée (63) installée sur la console en équerre (35), butée qui, lors du tronçonnage et de l'usinage des extrémités d'une barre de têtière (46) d'une ferrure de fenêtre (44) ayant une largeur donnée (64) et d'une barre de crémone (45) de la ferrure (44) ayant une largeur réduite (65) par rapport à la barre de têtière (46), agit uniquement pour la barre de têtière (46), plus large.

14. Presse à découper suivant l'une des revendications 7 à 13, **caractérisée par** l'équipement de la console en équerre (35) avec un axe de guidage (66) et un boulon de serrage (67) réalisé à ressort pour guider la barre de têtière (46) d'une ferrure (44) de fenêtre oscillo-battante qui présente une plus grande largeur (64) par rapport à la barre de crémone (45) de la ferrure.
